# EUROPEAN PATENT SPECIFICATION

(11) **EP 4 122 739 B1**
(45) Date of publication and mention of the grant of the patent: **06.12.2023**
(21) Application number: 21187099.3
(22) Date of filing: 22.07.2021
(51) Int. Cl.: B60K 37/06, G02B 6/06

(54) **A USER INTERFACE FOR A VEHICLE, A VEHICLE, AND A METHOD FOR OPERATING A USER INTERFACE FOR A VEHICLE**
BENUTZERSCHNITTSTELLE FÜR EIN FAHRZEUG, FAHRZEUG UND VERFAHREN ZUM BETREIBEN EINER BENUTZERSCHNITTSTELLE FÜR EIN FAHRZEUG
INTERFACE UTILISATEUR POUR UN VÉHICULE, VÉHICULE ET PROCÉDÉ DE FONCTIONNEMENT D'UNE INTERFACE UTILISATEUR POUR UN VÉHICULE

(43) Date of publication of application: 25.01.2023
(73) Proprietor: Bayerische Motoren Werke Aktiengesellschaft, 80809 München (DE)
(72) Inventor: Iliffe-Moon, Etienne, Menlo Park, 94025 (US)

(56) References cited:
- EP-A1- 3 916 442
- EP-A2- 2 738 582
- US-A1- 2020 079 216

## Description

The present invention relates to a user interface for a vehicle. The present invention also relates to a vehicle, comprising such a user interface, and a method for operating a user interface for a vehicle.

A known user interface can comprise a two-dimensional flat display to display information and/or a physical button or knob to capture user input and to provide a physical affordance for the user.

Two-dimensional displays are used to present a variety of information to the driver and/or other passengers of the vehicle. Two-dimensional displays can comprise a touch functionality to capture user input. Thereby, the two-dimensional display with touch functionality, also called touchscreen, can provide a part of the user interface with a large number of functions. During driving it appears to be difficult to make use of the large number of functions, in particular for the driver who needs to pay attention to driving the vehicle. Furthermore, due to a lack of feedback perceivable by a user, e.g., the driver, in case of a touch sensitive display it appears difficult for the user to perform an accurate input, e.g., with a user's finger. For the same reason, the driver is distracted and needs to pay visual and cognitive attention to operate a touch sensitive display. That is, such a two-dimensional display comprises a plurality of aspects that needs to be improved.

Physical buttons provide a physical affordance which provides important benefits, in particular when used in a vehicle. E.g., user-friendliness by providing physical stability to a finger interacting with the button, reduced distraction as opposed to using a touchscreen, and familiarity as the button's physical location and function is substantial and consistent. The physical button allows a blind operation since the user memorizes and/or feels where to find the button, how to operate it and/or which function it has. Thus, compared to a touch sensitive display, a physical button enables a favorable tactile perception. In addition, a physical button may also be an aesthetic feature of the vehicle. However, physical buttons have properties that may be disadvantageous, such as having a dedicated function and a lack of relationship to the digital user interface, e.g., to content that is displayed on a two-dimensional display.

US 2020/0079216 A1 discloses an operating apparatus that comprises a touchscreen and an operating knob in the region of the touchscreen, wherein the knob comprises a sidewall with a plurality of luminous outputs of at least one luminous segment or a pixel matrix. The knob can have a touch-sensitive and/or proximity-sensitive surface. The interaction with the operating apparatus comprises, rotary, sliding, and/or push movement captured by using the knob. However, the possibility for the user to interact with the user interface is limited interaction with the knob or with the touchscreen.

EP 3 916 442 A1 describes an optical faceplate for use with a two dimensional display. The optical faceplate comprises a contact surface at a bottom side of the optical faceplate for contacting the two dimensional display. The optical faceplate further comprises a three dimensional display surface at a top side of the optical faceplate, and an optic light guide material provided between the contact surface and the three dimensional display surface.

The object of the invention is to improve the possibilities of the user interface for user interaction.

The object is achieved by the features of the independent claims. Embodiments of the invention are given in the dependent claims, in the figures and in the description.

The user interface for a vehicle is adapted to present visible information and to capture user input. The user interface comprises a two-dimensional touch sensitive display for displaying information on a display portion and for capturing touch user input, and an optical faceplate comprising a contact surface, a three-dimensional display surface for displaying information, and an optic light guide material provided between the contact surface and the three-dimensional display surface. I.e., the faceplate comprises the contact surface, the three-dimensional display surface, and the optic light guide material. The faceplate is integrated into the display so that an areal extension of the three-dimensional display surface and/or an areal extension of the contact surface is smaller than an areal extension of the display, and so that the contact surface is arranged to receive light emitted from the display. The display portion is the part of the two-dimensional display which remains visibly perceivable by a user to deliver information that is two-dimensionally presented by the two-dimensional display. As the display is touch sensitive, the display portion is touch sensitive to capture touch user input. In contrast, the two-dimensional display comprises a contact portion that contacts the contact surface of the faceplate to transmit light that is emitted by the contact portion of the two-dimensional display via the contact surface and the light guide material to the three-dimensional display surface, i.e., the contact portion of two-dimensional display transmits information to be presented by the three-dimensional display surface to the faceplate by emitting light that is receivable by the contact surface, and the contact portion is covered by the faceplate. By integrating the faceplate into the display, the user interface has a physical, three-dimensional form. The faceplate provides a physical affordance of the user interface and, at the same time, enables output of visibly perceivable information at the three-dimensional display surface.

According to the invention, the user interface is adapted to capture user interaction relative to the faceplate. The user interaction relative to the faceplate can improve the form of user interaction in particular combined with a large two-dimensional display and makes a broad variety of user input relative to the three-dimensional faceplate and/or in the surrounding of the two-dimensional display possible. A user interaction relative to the faceplate can be a user input via the touch sensitive display from which the relative position to the faceplate is derivable and/or user input captured in a space in front of the user interface, i.e., in front of the display and/or in front of the faceplate.

According to the invention, the user interface is adapted to derive a combined user input from the combination of the touch user input by the touch sensitive display and the user interaction relative to the faceplate. The user interface evaluates user interaction relative to the three-dimensional faceplate, including interactions onto the three-dimensional display surface of the faceplate, and/or the area outside of the faceplate, i.e., the display portion of the two-dimensional display. By combining the touch user input with the user interaction, a broad variety of different combined user input becomes possible. The combination of touch user input and user interaction to derive the combined user input means that the user interface determines the user input on the basis of both, the touch user input captured by the two-dimensional display and the user interaction relative to the faceplate.

Optionally, the user interface is adapted to derive the combined user input from the touch user input by the touch sensitive display and the user interaction relative to the faceplate being captured simultaneously and/or consecutively. In this embodiment, the user interface derives the combined user input from touch user input and user interaction that is determined to be input in a presumably combined manner. I.e., the simultaneous capturing of touch user input and user interaction can be determined to be likely to be performed with the intention of the user to perform combined user input, e.g., user input by two fingers of one hand of a user, wherein one finger touches the display portion and another finger performs user input relative to the faceplate, or a hand performing touch user input and gesture of a user performed relative to the faceplate so that the simultaneously captured touch user input and user interaction are combined to derive a combined user input. Additionally, or alternatively, consecutive capturing of touch user input and user interaction can be determined to be presumably performed with the intention of the user to be a combined user input. The user interface can be adapted to derive a combined user input from simultaneous input within a certain distance and/or from consecutive input within a certain time interval, which could reflect the intention of a user to perform combined user input.

Optionally, the user interface is adapted to derive the combined user input from the touch user input and the user interaction that bridge between the faceplate and the display. This embodiment, allows a combination of user input that is intended to be performed on both, the display and relative to the faceplate, wherein a boundary between the display and the faceplate is irrelevant for the combined user input. An example of user input that bridges between the faceplate and the display is one finger that touches the three-dimensional display surface of the faceplate whilst another finger touches the two-dimensional display and optionally moves thereon to perform a gesture.

Optionally, the user interface is adapted to derive a transition from touch user input to user input relative to the faceplate and/or from user interaction relative to the faceplate to touch user input; wherein the user interface is adapted to derive the combined user input with dependence on the transition. In this embodiment, the user can, for example, move a finger from the three-dimensional display surface to the display portion, and said movement of the finger is connected to a transition from input relative to the faceplate to touch user input. This transition can be used to, for example, drag and/or move content that is displayed on the three-dimensional display surface to the display portion or vice versa.

Optionally, the three-dimensional display surface is touch sensitive to capture user interaction to enable the faceplate to capture user interaction by a user's touch on the three-dimensional display surface.

Optionally, the user interface comprises an imaging device for capturing the user interaction to capture user gestures, e.g., performed by a user's body, hand, finger, etc., as user interaction relative to the faceplate. Optionally, the imaging device is arranged to and adapted to capture user gestures in front of the faceplate, in front of the display and/or at a location in a cabin of the vehicle where a passenger typically sits.

Optionally, the imaging device is adapted to capture mid-air gestures as user interaction and/or to perform proximity sensing for capturing user interaction. Therein, a mid-air gesture is a user interaction in a distance of 6 inches to 12 inches from the faceplate. In this embodiment, the user can coordinate the user interaction to be performed with the faceplate as a physical affordance, i.e., the user knows, by virtue of the location of the faceplate, where to perform the user interaction.

Optionally, the imaging device is based on RGB-imaging, IR-imaging, TOF-imaging and/or comprises a LIDAR device to provide the user interface with imaging devices which are well-known as such and for which a reliable data processing and in particular object detection is available. This embodiment can be camera based. Camera based sensing can deliver information on presence, proximity and hover, e.g., non-touch inputs that provide pre-touch GUI input, e.g. display/GUI wakeup, GUI highlighting/effects, etc. Eye tracking can provide input or visual/graphical/optical effects, e.g., simulate dynamic parallax effects, rendering of color, material, finish, and texture effects.

Optionally, the user interface is adapted to locally and/or temporally distinguish a plurality of touch user inputs and/or of user interaction relative to the faceplate to enable the user interface to derive combined user input from different sections and/or zones of the user interface, and/or to derive combined user input from temporarily distinguished user input. The local difference can depend on a distance, e.g. on a typical extension of a hand. For example, user input that is performed within the diameter of 10 cm can be determined to be combined. The temporal difference can depend on an interval between consecutive touch user input and/or user interaction, e.g., if consecutive user input is performed within a fraction of a second, the user input is determined to be combined.

Optionally, the user interface is adapted to capture user input by multiple users to enable more than one user to provide user input to the user interface.

Optionally, the user interface comprises a user and/or user seat location sensor to enable the user interface to recognize the user and/or the user's seat location, e.g., a facial recognition, user recognition, seat occupancy, etc. This embodiment can improve the recognition of user gestures, i.e., user interaction, by the possibility that a location of a user within a cabin of the vehicle and/or a typical manner of a user performing a gesture can be considered to determine combined user input. Optionally, if the user is recognized, gestures may be customizable by the user.

Optionally, the user interface is adapted to display information in dependence on the combined user input to provide a dynamic and optionally real-time visual and/or graphical feedback to the user input.

Optionally, the user interface is adapted to derive the combined user input in dependence on the position of the touch user input relative to the faceplate, i.e., the touch user input is locally related to the faceplate. E.g., the coordinates of the touch user input relative to the faceplate can influence the combined user input. This allows, for example, a pivoting, wherein one finger of a user is fixed at the faceplate and another finger of the user rotates around the faceplate and simultaneously touches the display portion to perform user input. In this embodiment, especially with a large display, it is possible to distinguish between different users which are simultaneously present within the vehicle, since each of the users sits on a different position within the vehicle and therefore typically performs user input at a different position of the display.

According to the invention, a vehicle comprising a user interface. The vehicle can comprise as a CID or a panorama display, steering wheel controller (MFL), a panorama head-up display (PHUD) and/or a personal information display (PID) which comprises the user interface.

According to the invention, a method of operating a user interface for a vehicle adapted to present visible information and to capture user input; the method comprises displaying information on a display portion of a two-dimensional touch sensitive display and capturing touch user input with the two-dimensional display; transmitting information (3b '3b', 3b") to be displayed from the display to a three-dimensional surface display of an optical faceplate via a contact surface contacting the display and an optic light guide material provided between the contact surface and the three-dimensional display surface; wherein the faceplate is integrated into the display so that an areal extension of the three-dimensional display surface and/or an areal extension of the contact surface is smaller than an areal extension of the display, and so that the contact surface is arranged to receive light emitted from the display; capturing user interaction relative to the faceplate; and deriving a combined user input from the combination of the touch user input by the touch sensitive display and the user interaction relative to the faceplate. The method for operating the user interface comprises the same effects and can comprise optional features as described with reference to the user interface as described above.

Further features of the invention are given in the claims, in the figures, and in the description of the figures.

Features and combinations of features as describes above and features and combinations of features as disclosed in the figures and described with relation to the figures can be used as such or combined without leaving the scope of the invention.

The figures show:
- Fig. 1: a schematic representation of a user interface comprised by a vehicle according to an embodiment of the invention;
- Fig. 2: a section of a schematic side view of the user interface shown in Fig. 1;
- Fig. 3: a schematic of a method for operating the user interface shown in Figs. 1 and 2; and

Fig. 4 - 9 a schematic of a user input that is captured by the user interface, each.

In the figures, the same and functionally similar elements are used with the same reference signs.

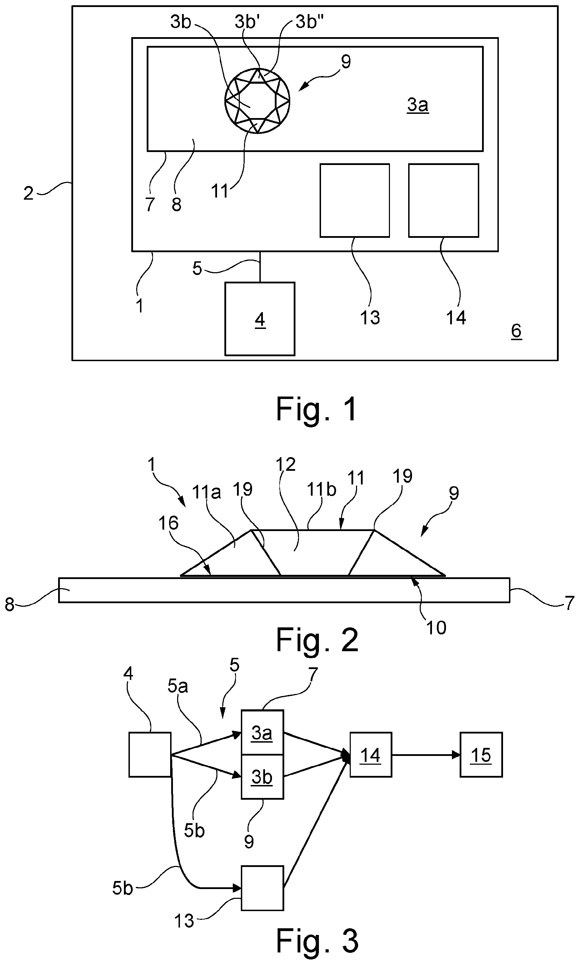

Fig. 1 shows a schematic representation of a user interface 1 comprised by a vehicle 2. The user interface 1 is adapted to present visible information 3a, 3b, 3b', 3b" to a user 4 and adapted to capture user input 5 by a user 4. The user 4 can be a driver of the vehicle 2 and/or a passenger of the vehicle 2. The user 4 can also be a passenger of an autonomously driving vehicle 2.

The user interface 1 is arranged in a cabin 6 of the vehicle 2 so that the user 4 can perceive visible information 3a, 3b, 3b', 3b" output by the user interface 1.

The user interface 1 comprises a two-dimensional display 7, also called a display panel, for displaying information 3a on a display portion 8. The display portion 8 is a section of the two-dimensional display 7 on which information 3a is displayed in a two-dimensional and visibly perceivable manner. However, information 3a that is displayed can also be rendered to appear three-dimensional, e.g., the display 7 may be a display that simulates 3D, e.g., a stereographic or autostereographic display. The two-dimensional display 7 comprises a pixel arrangement, e.g., a pixel matrix with a two-dimensional array of colored pixels that can be illuminated individually. The two-dimensional display 7 does not necessarily refer to a geometric shape of the display, e.g., the display may be curved and/or bent. The two-dimensional display 7, e.g., CID or panorama display, can be curved or bent about one or more axes, optionally to have a shape that follows a section of the cabin 6 of the vehicle 2.

The user interface 1 comprises an optical faceplate 9 comprising a contact surface 10, a three-dimensional display surface 11 for displaying information 3b, 3b', 3b", and an optic light guide material 12 provided between the contact surface 10 and the three-dimensional display surface 11 (see also Fig. 2). The faceplate 9 is arranged at a front of the display 7. The faceplate 9 is integrated into the display 7 so that an areal extension of the three-dimensional display surface 11 and/or an areal extension of the contact surface 10 is smaller than an areal extension of the display 7, and so that the contact surface 10 is arranged to receive light emitted from the display 7. The faceplate 9 is mounted to the display 7 so that the faceplate 9 covers a partial area of the display 7. The faceplate 9 and its arrangement are also shown in Fig. 2 and further explained with reference thereto.

Thus, the user interface 1 comprises the two-dimensional display 7 and the optical faceplate 9 to output the visibly perceivable information 3a, 3b, 3b', 3b". The faceplate 9 is a localized touchpoint/affordance with specific user interface content and enables user interactions. In one embodiment, the faceplate 9 is substantially smaller than the display 7, e.g., the larger display 7 has a diagonal of 10 inches to 50 inches and the smaller faceplate 9 has a diagonal, diameter and/or characteristic length of 1 inch to 4 inches.

In one embodiment, the display 7 and the faceplate 9 are touch sensitive, e.g., by providing capacitive or resistive touch sensitivity, to capture user input 5. The user input 5 can be captured by the touch sensitive display 7 as touch user input 5b and relative to the faceplate 9 as user interaction 5b. The user input 5b relative to the faceplate 9 can be captured by the three-dimensional display surface 9 which is touch sensitive.

The user interface 1 comprises an imaging device 13 for capturing further user interaction 5b. I.e., user interaction 5b relative to the faceplate 9 can be captured by the faceplate 9 and/or the imaging device 13. The imaging device 13 is adapted to capture mid-air gestures and/or to perform proximity sensing in the vicinity of the faceplate 9, i.e., in front of the faceplate 9. The imaging device 13 can be based on RGB-imaging, IR-imaging, TOF-imaging and/or comprises a LIDAR device. The user interface 1 is adapted to recognize different classes of touch, proximity, and/or mid-air gestures.

The user input 5, i.e., the touch user input 5a and the user interaction 5b, are transmitted to an input processing device 14 that is comprised by the user interface 1. Optionally, the input processing device 14 is a data processing device. For receiving the user input 5, the input processing device 14 comprises one or more interfaces to receive, and/or one or more data storages to store, data that represents user input 5 captured by the display 7 and/or relative to the faceplate 9. The input processing device 14 is adapted to derive combined user input 15 (see also Fig.3). Based on the combined user input 15, the user interface 1 is adapted to determine a control signal which contains control data to display information 3a, 3b, 3b', 3b" on the display portion 7 and/or on the faceplate 9.

The user interface 1 can comprise multisensory feedback such as visual feedback as displayed on the two-dimensional display 7, the faceplate 9, other OLED/LCD displays, ambient lighting or projection, mechanical actuation and/or further tactile feedback, audio feedback such as sound effects or music, and/or olfactory feedback (not shown). The user interface 1 provides multimodal interactions, i.e., haptics and the visually perceivable display of information 3a, 3b, 3b', 3b" are combined and can further be improved by the application of, e.g., an augmented reality or virtual reality head mounted display.

Fig. 2 shows a section of a schematic side view of the user interface 1 shown in Fig. 1. Fig. 2 is described with regard to details of the user interface 1 of Fig. 1.

The faceplate 9 is integrated into the two-dimensional display 7. I.e., the two-dimensional display 7 comprises a contact portion 16 that contacts the contact surface 10 of the faceplate 9 to transmit light that is emitted by the two-dimensional display 7 at the contact portion 16 via the contact surface 10 and the light guide material 12 to the three-dimensional display surface 11 where the transmitted light contains the information 3b, 3b', 3b" that is visible on the three-dimensional display surface 11.

The two-dimensional display comprises a pixel arrangement and a cover layer covering the pixel arrangement (not shown in the Figures). The cover layer comprises a cutout and/or cavity forming a recess of the two-dimensional display 7. The contact surface 10 of the faceplate 9 is arranged in the recess of the two-dimensional display 7. Thus, the contact portion 16 of the display 7 is located in the recess where the contact surface 10 contacts the contact portion 16 of the display 7.

The three-dimensional display surface 11 comprises a plurality of surface portions 11a, 11b that are separated from each other by an edge 17. The faceplate 9 can be shaped to provide a three-dimensional surface that the user may touch. For example, the three-dimensional display surface 11 may be faceted, e.g., like a jewel, as schematically shown in Figs. 1 and 2 or have segmented or continuous concave, convex, and/or organic surface portions, and/or may have a symmetric or asymmetric, round or rectangular shape (not shown). The surface portions 11a, 11b can also be separated differently than by edges 17, e.g., the surface portions 11a, 11b can appear to flow continuously into each other. Also, a combination thereof and edges 17 is possible. In another non-shown embodiment, an edge or a section of the three-dimensional display surface 11 may be virtually simulated or enhanced by the graphical treatment of the GUI, e.g., digitally change the color/material/finish, material/surface rendering and/or lighting can change the appearance of the faceplate 9.

As shown in Fig. 2, the plurality of edges 17 segments the three-dimensional display surface 11 in a plurality of surface portions 11a, 11b. The user interface 1 is adapted to display information 3b, 3b', 3b" so that the information 3b',3b" that is visible on the plurality of surface portions 11a, 11b can be dependent on or independent of each other. The user interface 1 is adapted to separately determine the information 3b', 3b" that is visible on the plurality of surface portions 11a, 11b. I.e., each segment of the three-dimensional display surface 11 of faceplate 9 can display different information 3b, 3b', 3b".

The user interface 1 is adapted to separately capture user input 5b relative to surface portions 11a, 11b of the faceplate 9. User input 5b separately captured for different surface portions 11a, 11b can be used to derive different combined user input 15. For example, if the user 4 touches a first surface portion 11a and performs a specific touch user input 5a the combined user input can be different than if the user 4 would touch a second surface portion 11b and performs a specific touch user input 5b.

The faceplate 9 can be made of glass or a polymer. As indicated schematically in particular in Fig. 2, the faceplate 9 is a solid body without any cavity to ensure an efficient transmission of light. The light that is transmitted from the contact portion 16 of the two-dimensional display 7 to the three-dimensional display surface 11 leaves the faceplate 9 directly at the boundary between the three-dimensional display surface 11 and a surrounding of the faceplate 9, e.g., air, typically the in the cabin 6 of the vehicle 2. I.e., the light that is transmitted from the contact portion 16 is transmitted through only the solid body of the faceplate 9 and has to pass two boundaries only, namely from the contact portion 16 to the contact surface 10 of the faceplate 9 and from the three-dimensional display surface 11 of the faceplate 9 to the surrounding. This reduces the number of boundaries that the light has to pass when travelling from the contact portion 16 to the user. Thereby, optical losses can be held at a low level and high-quality light-transmission is achieved.

Optionally, the light guide material 12 is a composition of many optical fibers (fiber optics elements or similar light guiding material). The light guide material 12 is processed by being drawn and compressed (under heat and pressure) such that the resulting fiber optics elements are on pitch spacing of between 5 and 50 microns or less. Thereby, the faceplate 9 becomes a solid body. The fiber optics elements can be oriented (e.g., as a result of the material processing/formation or the fabrication of the final 3D Faceplate part) to control the viewing angle (i.e., a viewing cone with a central axis longitudinal to an axis of the fiber optics element). The viewing angle of a 3D faceplate 9 is determined in whole by the viewing angle of the fiber optics elements that make up the faceplate 9. The faceplate 9 can provide a high-quality transmission of light and a viewing cone suited to the view angle of the user 4 to be used with a high-resolution two-dimensional display 7, e.g., a two-dimensional display 7 with 4k to 8k resolution and/or a pixel density of 600 pixels per inch or more. However, a pixel density of 150 pixels per inch or 200 pixels per inch is also possible and provides an adequate resolution.

Fig. 3 a shows schematic of a method for operating the user interface shown in Figs. 1 and 2. The method of operating the user interface 1 is performed as follows.

Information 3a is displayed on the display portion 8 of the two-dimensional touch sensitive display 7 and touch user input 5a by a user 4 is captured with the two-dimensional display 7. Information 3b ,3b', 3b" is displayed by the three-dimensional display surface 11 of the faceplate 9 and user interaction 5b, by the user 4, relative to the faceplate 9 is captured. Optionally, the imaging device 13 captures user interaction 5b by the user 4.

The touch user input 5a and the user interaction 5b form the user input 5. In this embodiment, the user input 5 is thus captured by the two-dimensional display 7, the faceplate 9 and the imaging device 13. It is possible to determine if a hand of a user 4 is a left or right hand of the driver and/or a passenger by recognizing the hand, e.g., left vs. right, approach angle of the hand, or hand-to-body relationship, etc. This could be achieved by the imaging device 13 as, e.g., a gesture camera focused on a hand/arm region vs. a cabin camera with a field of view sufficient to cover both left and right users.

The user input 5 is transmitted to the input processing device 14, which derives the combined user input 15 from the combination of the touch user input 5a by the touch sensitive display 7 and the user interaction 5b relative to the faceplate 9, and optionally the user interaction 5b captured by the imaging device 13.

Based on the combined user input 15, a control signal is determined (not shown) which contains data to display information 3a, 3b, 3b', 3b" on the display portion 7 and/or on the faceplate 9, and/or which performs control of specific function of the vehicle 2 related to the combined user input 15.

User gestures, i.e., user input 5, can comprise moving, e.g., dragging, sliding, swiping, rotating, etc. from the faceplate 9 to the display 7 and vice versa. Thus, during user input 5 a transition can take place from touch user input 5a on the display 7 to user interaction 5b relative to the faceplate 9, or vice versa. The transition can affect the determination of combined user input 15 by the input processing device 14.

The combination of user gestures, i.e., of user input 5, can improve visual and graphical user interface 1. The user interface 1 and the determination of combined user input 14 enables intuitive and semantically relevant gestures and contextual interaction which is desirable to improve the ease of use, to reduce the distraction of the driver, to improve the integration of the user interface into the interior of the vehicle 2. In one embodiment, the user interface is customizable by the user 4 to set and/or control different classes of gestures and the resulting action of those gestures to further improve the user interface 1.

The embodiments of Figs. 1 and 3 show a single user 4, each. However, a plurality of users 4 can perform user input 5, e.g., consecutively and/or simultaneously at different locations, i.e., zones, of the user interface 1.

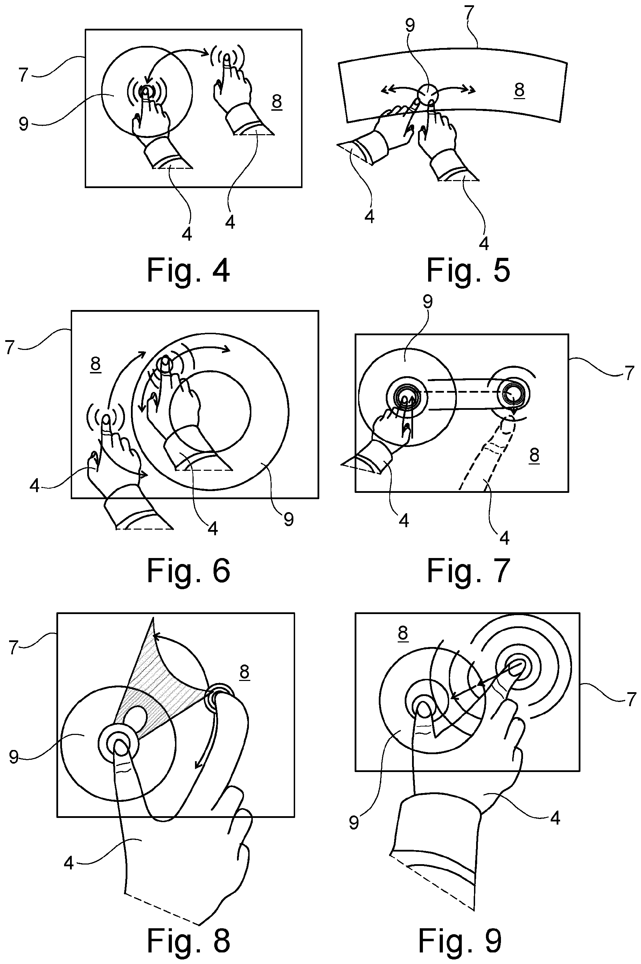

The user interface 1 is capable of capturing: single touch, i.e., one finger, and multi-touch, i.e., multiple fingers and actions; single or multiple users 4, e.g., driver and passenger and/or left and right rear passenger, etc.; direct touch, proximity and/or mid-air gesture. Different aspects of touch gestures comprise momentary, e.g., tap, and extended contact, e.g., long press; limited motion, e.g., swipe; and continuous motion, e.g., turning and/or rotating a dial depicted on the user interface 1; light, regular, and force-touch. I.e., the user interface 1 can comprise a touch sensor and a display panel laminated together, and/or a touch sensor placed beneath the display, e.g., an array of strain gauges or pressure sensors mounted to some mechanical/structural arrangement to enable a force sensing as a form of touch sensing. User gestures are further explained with reference to Figs. 4 to 9.

Figs. 4 - 9 show a schematic of a user input 5 that is captured by the user interface 1, each.

Each of the Figs. 4 - 9 show schematically the two-dimensional display 7 and the display portion 8, the faceplate 9, and one or more users 4 in Figs. 4-6, which are represented by two hands performing user input 5, and a user 4 in Figs. 7-9 which is represented by one hand using one finger in Fig. 7 and two fingers in Figures 8 and 9 of said hand to perform user input 5.

Fig. 4 shows a double tap, wherein first user input 5 is performed as user interaction 5b relative to the faceplate 9, i.e., the three-dimensional display surface 11 of the faceplate 9 is touched, and consecutively a second user input 5 is performed as a touch user input 5a by touching the touch sensitive display portion 8. Thus, the user input 5 is a consecutive user input 5. The user input 5 according to Fig. 4 can be performed by one or more users 4. The user interface 1 determines a combined user input 15 based on the user interaction 5b and the touch user input 5a, wherein the coordinates of the user interaction 5b and the touch user input 5a and/or the temporal difference between the user interaction 5b and the touch user input 5a is used to determine the combined user input 15.

Fig. 5 shows a multitouch gesture performed by two hands. In this case, the user input 5 is simultaneously performed. Both hands of the user 4, or one hand of two users 4 each, touch the three-dimensional display surface 11 first, i.e., both hands perform user interaction 5b relative to the faceplate 9. Both hands are moved from the three-dimensional display surface 11 to the display portion 8 and perform a prolonged touch user input 5a, i.e., both hands are moved apart from each other and transition from the faceplate 9 to the display 7. The user interface 1 determines a combined user input 15 based on the coordinates of the hands and/or on the dynamics with which the hands move.

Fig. 6 shows a multitouch gesture performed by two hands. In this case, the user input 5 is consecutively performed. One hand touches the display portion 8 first, i.e., the hand performs touch user input 5a by moving circularly around the faceplate 9 with an angular velocity. Subsequently, a second user input 5 is performed as a user interaction 5b by touching the three-dimensional display surface 11 and moving circularly at the three-dimensional display surface 11 of the faceplate 9 with an angular velocity. The order of the aforementioned user input 5 can also be reversed. The user input 5 according to Fig. 6 can be performed by one or more users 4. The user interface 1 determines a combined user input 15 based on the touch user input 5a and the user interaction 5b, wherein the coordinates of, the angular velocity of, and/or the temporal difference between the user interaction 5b and the touch user input 5a is used to determine the combined user input 15.

Fig. 7 shows a gesture performed by a single finger of the user 4. The user 4 touches the three-dimensional display surface 11 to perform user interaction 5b relative to the faceplate 9, depicted as a finger with a solid line. The user 4 moves the finger from the three-dimensional display surface 11 to the display portion 8 and thereby performs touch user input 5a, depicted as horizontal lines. Thus, the user input 5 comprises a transition from the three-dimensional surface 11 to the display portion 7. At a specific position on the display portion 8, the user 4 stops touching the display portion 8 and releases the finger, depicted as the finger represented with dashed line. The user interface 1 determines a combined user input 15 based on the user interaction 5b and the touch user input 5a in dependence on the speed, dynamics and/or direction of the movement of the finger.

Fig. 8 shows a gesture simultaneously performed by two fingers of the hand of the user 4. The user 4 touches simultaneously the three-dimensional display surface 11 and the display portion 8, i.e., one of the fingers touches the three-dimensional display surface 11 and the other of the fingers touches the display portion 8. I.e, the user input 5 bridges the display portion 7 and the faceplate 9 simultaneously. While the finger on the three-dimensional display surface 11 performs user interaction 5b relative to the faceplate 9, e.g., to select a function, the finger that touches the display portion 8 performs touch user input 5a and moves around the faceplate 9. For example, the selected function can correspond to an intelligent personal assistant and/or a navigation system of the vehicle 2, the finger that touches the display portion 8 can be used to adjust the volume of audible output of the selected function. The user interface 1 determines a combined user input 15 based on the user interaction 5b and the touch user input 5a in dependence on the speed, dynamics and/or direction of the movement of the finger.

Fig. 9 shows a gesture simultaneously performed by two fingers of the hand of the user 4. The user 4 touches simultaneously the three-dimensional display surface 11 and the display portion 8, i.e., one of the fingers touches the three-dimensional display surface 11 and the other of the fingers touches the display portion 8. I.e, the user input 5 bridges the display portion 7 and the faceplate 9 simultaneously. While the finger on the three-dimensional display surface 11 performs user interaction 5b relative to the faceplate 9, the finger that touches the display portion 8 performs touch user input 5a and moves towards the faceplate 9. The user interface 1 determines a combined user input 15 based on the user interaction 5b and the touch user input 5a in dependence on the speed, dynamics and/or direction of the movement of the finger. For example, this combined user input 15 can be used to merge content and/or to zoom in or out.

### List of reference signs

- 1: user interface
- 2: vehicle
- 3a, 3b, 3b', 3b": information
- 4: user
- 5: user input
- 5a: touch user input
- 5b: user interaction
- 6: cabin
- 7: two-dimensional display
- 8: display portion
- 9: faceplate
- 10: contact surface
- 11: three-dimensional display surface
- 11a, 11b: surface portion
- 12: light guide material
- 13: imaging device
- 14: input processing device
- 15: combined user input
- 16: contact portion
- 17: edge

## Claims

1. A user interface (1) for a vehicle (2) adapted to present visible information (3a, 3b, 3b', 3b") and to capture user input (5); the user interface (1) comprises
- a two-dimensional touch sensitive display (7) for displaying information (3a) on a display portion (8) and for capturing touch user input (5a), and
- an optical faceplate (9) comprising a contact surface (10), a three-dimensional display surface (11) for displaying information (3b, 3b', 3b"), and an optic light guide material (12) provided between the contact surface (10) and the three-dimensional display surface (11); wherein
- the faceplate (9) is integrated into the display (7) so that an areal extension of the three-dimensional display surface (11) and/or an areal extension of the contact surface (10) is smaller than an areal extension of the display (7), and so that the contact surface (10) is arranged to receive light emitted from the display (7); wherein
- the user interface (1) is adapted to capture user interaction (5b) relative to the faceplate (9); and wherein
- the user interface (1) is adapted to derive a combined user input (15) from the combination of the touch user input (5a) by the touch sensitive display (7) and the user interaction (5b) relative to the faceplate (9), wherein the combined user input (15) is determined on the basis of both, the touch user input (5a) captured by the two-dimensional display (7) and the user interaction (5b) relative to the faceplate (9).

2. The user interface as claimed in claim 1, wherein
- the user interface (1) is adapted to derive the combined user input (15) from the touch user input (5a) by the touch sensitive display (7) and the user interaction (5b) relative to the faceplate (9) being captured simultaneously and/or consecutively.

3. The user interface as claimed in any of the preceding claims; wherein
- the user interface (1) is adapted to derive the combined user input (15) from the touch user input (5a) and the user interaction (5b) that bridge between the faceplate (9) and the display (7).

4. The user interface as claimed in any of the preceding claims; wherein
- the user interface (1) is adapted to derive a transition from touch user input (5a) to user input (5b) relative to the faceplate (9) and/or from user interaction (5b) relative to the faceplate (9) to touch user input (5a); wherein
- the user interface (1) is adapted to derive the combined user input (15) with dependence on the transition.

5. The user interface as claimed in any of the preceding claims; wherein
- the three-dimensional display surface (11) is touch sensitive to capture user interaction (5b).

6. The user interface as claimed in any of the preceding claims; wherein
- the user interface (1) comprises an imaging device (13) for capturing the user interaction (5b).

7. The user interface as claimed in claim 6; wherein
- the imaging device (13) is adapted to capture mid-air gestures as user interaction (5b) and/or to perform proximity sensing for capturing user interaction (5b).

8. The user interface as claimed in claim 6 or 7; wherein
- the imaging device (13) is based on RGB-imaging, IR-imaging, TOF-imaging and/or comprises a LIDAR device.

9. The user interface as claimed in any one of the preceding claims; wherein
- the user interface (1) is adapted to locally and/or temporally distinguish a plurality of touch user inputs (5a) and/or of user interaction (5b) relative to the faceplate (9).

10. The user interface as claimed in claim 9; wherein
- the user interface (1) is adapted to capture user input (5) by multiple users.

11. The user interface as claimed in any one of the preceding claims; wherein
- the user interface (1) comprises a user and/or user seat location sensor.

12. The user interface as claimed in any one of the preceding claims; wherein
- the user interface (1) is adapted to display information (3a, 3b, 3b', 3b") in dependence on the combined user input (15).

13. The user interface as claimed in any one of the preceding claims; wherein
- the user interface (1) is adapted to derive the combined user input (15) in dependence on the position of the touch user input (5a) relative to the faceplate (9).

14. A vehicle (2) comprising the user interface (1) as claimed in any of the preceding claims.

15. A method of operating a user interface (1) for a vehicle (2) adapted to present visible information (3a, 3b, 3b', 3b") and to capture user input (5); the method comprises:
- displaying information (3a) on a display portion (8) of a two-dimensional touch sensitive display (7) and capturing touch user (5a) input with the two-dimensional display (7);
- transmitting information (3b ,3b', 3b") to be displayed from the display (7) to a three-dimensional surface display (11) of an optical faceplate (9) via a contact surface (10) contacting the display (7) and an optic light guide material (12) provided between the contact surface (10) and the three-dimensional display surface (11); wherein the faceplate (9) is integrated into the display (7) so that an areal extension of the three-dimensional display surface (11) and/or an areal extension of the contact surface (10) is smaller than an areal extension of the display (7), and so that the contact surface (10) is arranged to receive light emitted from the display (7);
- capturing user interaction (5b) relative to the faceplate (9); and
- deriving a combined user input (15) from the combination of the touch user input (5a) by the touch sensitive display (7) and the user interaction (5b) relative to the faceplate (9), wherein the combined user input (15) is determined on the basis of both, the touch user input (5a) captured by the two-dimensional display (7) and the user interaction (5b) relative to the faceplate (9).

## Patentansprüche

1. Anwenderschnittstelle (1) für ein Fahrzeug (2), die ausgelegt ist, sichtbare Informationen (3a, 3b, 3b', 3b") darzustellen und eine Anwendereingabe (5) aufzunehmen; wobei die Anwenderschnittstelle (1) Folgendes umfasst:
- eine zweidimensionale berührungsempfindliche Anzeigevorrichtung (7) zum Anzeigen von Informationen (3a) in einem Anzeigeabschnitt (8) und zum Aufnehmen einer Berührungsanwendereingabe (5a) und
- eine optische Planscheibe (9), die eine Kontaktfläche (10), eine dreidimensionale Anzeigeoberfläche (11) zum Anzeigen von Informationen (3b, 3b', 3b") und ein optisches Lichtleitermaterial (12), das zwischen der Kontaktfläche (10) und der dreidimensionalen Anzeigeoberfläche (11) vorgesehen ist, umfasst; wobei
- die Planscheibe (9) in die Anzeigevorrichtung (7) integriert ist, derart, dass eine Flächenausdehnung der dreidimensionalen Anzeigeoberfläche (11) und/oder eine Flächenausdehnung der Kontaktfläche (10) kleiner als eine Flächenausdehnung der Anzeigevorrichtung (7) ist, und derart, dass die Kontaktfläche (10) ausgelegt ist, Licht, das von der Anzeigevorrichtung (7) abgestrahlt wird, zu empfangen; wobei
- die Anwenderschnittstelle (1) ausgelegt ist, Anwenderinteraktionen (5b) in Bezug auf die Planscheibe (9) aufzunehmen; und
- die Anwenderschnittstelle (1) ausgelegt ist, eine kombinierte Anwendereingabe (15) aus der Kombination der Berührungsanwendereingabe (5a) durch die berührungsempfindliche Anzeigevorrichtung (7) und der Anwenderinteraktion (5b) in Bezug auf die Planscheibe (9) herzuleiten, wobei die kombinierte Anwendereingabe (15) auf der Grundlage sowohl der Berührungsanwendereingabe (5a), die durch die zweidimensionale Anzeigevorrichtung (7) aufgenommen wird, als auch der Anwenderinteraktion (5b) in Bezug auf die Planscheibe (9) bestimmt wird.

2. Anwenderschnittstelle nach Anspruch 1, wobei
- die Anwenderschnittstelle (1) ausgelegt ist, die kombinierte Anwendereingabe (15) aus der Berührungsanwendereingabe (5a) durch die berührungsempfindliche Anzeigevorrichtung (7) und der Anwenderinteraktion (5b) in Bezug auf die Planscheibe (9), die gleichzeitig und/oder aufeinanderfolgend aufgenommen werden, herzuleiten.

3. Anwenderschnittstelle nach einem der vorhergehenden Ansprüche; wobei
- die Anwenderschnittstelle (1) ausgelegt ist, die kombinierte Anwendereingabe (15) aus der Berührungsanwendereingabe (5a) und der Anwenderinteraktion (5b), die zwischen der Planscheibe (9) und der Anzeigevorrichtung (7) überbrücken, herzuleiten.

4. Anwenderschnittstelle nach einem der vorhergehenden Ansprüche; wobei
- die Anwenderschnittstelle (1) ausgelegt ist, einen Übergang von einer Berührungsanwendereingabe (5a) zu einer Anwendereingabe (5b) in Bezug auf die Planscheibe (9) und/oder von einer Anwenderinteraktion (5b) in Bezug auf die Planscheibe (9) zu einer Berührungsanwendereingabe (5a) herzuleiten; und
- die Anwenderschnittstelle (1) ausgelegt ist, die kombinierte Anwendereingabe (15) in Abhängigkeit vom Übergang herzuleiten.

5. Anwenderschnittstelle nach einem der vorhergehenden Ansprüche; wobei
- die dreidimensionale Anzeigeoberfläche (11) berührungsempfindlich ist, um eine Anwenderinteraktion (5b) aufzunehmen.

6. Anwenderschnittstelle nach einem der vorhergehenden Ansprüche; wobei
- die Anwenderschnittstelle (1) eine Bildgebungsvorrichtung (13) zum Aufnehmen der Anwenderinteraktion (5b) umfasst.

7. Anwenderschnittstelle nach Anspruch 6; wobei
- die Bildgebungsvorrichtung (13) ausgelegt ist, Gesten in der Luft als Anwenderinteraktion (5b) aufzunehmen und/oder eine Näherungserfassung zum Aufnehmen einer Anwenderinteraktion (5b) durchzuführen.

8. Anwenderschnittstelle nach Anspruch 6 oder 7; wobei
- die Bildgebungsvorrichtung (13) RGB-Bildgebung, IR-Bildgebung, TOF-Bildgebung als Grundlage verwendet und/oder eine LIDAR-Vorrichtung umfasst.

9. Anwenderschnittstelle nach einem der vorhergehenden Ansprüche; wobei
- die Anwenderschnittstelle (1) ausgelegt ist, mehrere Berührungsanwendereingaben (5a) und/oder Anwenderinteraktionen (5b) in Bezug auf die Planscheibe (9) örtlich und/oder zeitlich zu unterscheiden.

10. Anwenderschnittstelle nach Anspruch 9; wobei
- die Anwenderschnittstelle (1) ausgelegt ist, eine Anwendereingabe (5) durch mehrere Anwender aufzunehmen.

11. Anwenderschnittstelle nach einem der vorhergehenden Ansprüche; wobei
- die Anwenderschnittstelle (1) einen Anwender- und/oder einen Anwendersitzortssensor umfasst.

12. Anwenderschnittstelle nach einem der vorhergehenden Ansprüche; wobei
- die Anwenderschnittstelle (1) ausgelegt ist, Informationen (3a, 3b, 3b', 3b") abhängig von der kombinierten Anwendereingabe (15) anzuzeigen.

13. Anwenderschnittstelle nach einem der vorhergehenden Ansprüche; wobei
- die Anwenderschnittstelle (1) ausgelegt ist, die kombinierte Anwendereingabe (15) abhängig von der Position der Berührungsanwendereingabe (5a) in Bezug auf die Planscheibe (9) herzuleiten.

14. Fahrzeug (2), das die Anwenderschnittstelle (1) nach einem der vorhergehenden Ansprüche umfasst.

15. Verfahren zum Betreiben einer Anwenderschnittstelle (1) für ein Fahrzeug (2), die ausgelegt ist, sichtbare Informationen (3a, 3b, 3b', 3b") darzustellen und eine Anwendereingabe (5) aufzunehmen; wobei das Verfahren Folgendes umfasst:
- Anzeigen von Informationen (3a) in einem Anzeigeabschnitt (8) einer zweidimensionalen berührungsempfindlichen Anzeigevorrichtung (7) und Aufnehmen einer Berührungsanwendereingabe (5a) mit der zweidimensionalen Anzeigevorrichtung (7);
- Senden von Informationen (3b, 3b', 3b"), die angezeigt werden sollen, von der Anzeigevorrichtung (7) zu einer dreidimensionalen Oberflächenanzeige (11) einer optischen Planscheibe (9) mittels einer Kontaktfläche (10), die die Anzeigevorrichtung (7) berührt, und eines optischen Lichtleitermaterials (12), das zwischen der Kontaktfläche (10) und der dreidimensionalen Anzeigeoberfläche (11) vorgesehen ist; wobei die Planscheibe (9) in die Anzeigevorrichtung (7) integriert ist, derart, dass eine Flächenausdehnung der dreidimensionalen Anzeigeoberfläche (11) und/oder eine Flächenausdehnung der Kontaktfläche (10) kleiner als eine Flächenausdehnung der Anzeigevorrichtung (7) ist, und derart, dass die Kontaktfläche (10) ausgelegt ist, Licht, das von der Anzeigevorrichtung (7) abgestrahlt wird, zu empfangen;
- Aufnehmen einer Anwenderinteraktion (5b) in Bezug auf die Planscheibe (9) und
- Herleiten einer kombinierten Anwendereingabe (15) aus der Kombination der Berührungsanwendereingabe (5a) durch die berührungsempfindliche Anzeigevorrichtung (7) und der Anwenderinteraktion (5b) in Bezug auf die Planscheibe (9), wobei die kombinierte Anwendereingabe (15) auf der Grundlage sowohl der Berührungsanwendereingabe (5a), die durch die zweidimensionale Anzeigevorrichtung (7) aufgenommen wird, als auch der Anwenderinteraktion (5b) in Bezug auf die Planscheibe (9) bestimmt wird.

## Revendications

1. Interface utilisateur (1) pour un véhicule (2) adaptée de façon à présenter des informations visibles (3a, 3b, 3b', 3b") et à capturer une entrée d'utilisateur (5), cette interface utilisateur (1) comprenant :
- un écran tactile bidimensionnel (7) pour afficher des informations (3a) sur une partie d'affichage (8) et pour capturer une entrée tactile d'utilisateur (5a), et
- une plaque frontale optique (9) comportant une surface de contact (10), une surface d'affichage tridimensionnelle (11) pour afficher des informations (3b, 3b', 3b"), et un matériau guide de lumière optique (12) prévu entre la surface de contact (10) et la surface d'affichage tridimensionnelle (11) ; dans laquelle
- la plaque frontale (9) est intégrée dans l'écran (7) de manière à ce qu'une extension aérienne de la surface d'affichage tridimensionnelle (11) et/ou une extension aérienne de la surface de contact (10) soit plus petite qu'une extension aérienne de l'écran (7), et de manière à ce que la surface de contact (10) soit disposée de façon à recevoir la lumière émise depuis l'écran (7) ;
- cette interface utilisateur (1) étant adaptée de façon à capturer une interaction d'utilisateur (5b) relativement à la plaque frontale (9) ; et
- cette interface utilisateur (1) étant adaptée de façon à déduire une entrée combinée d'utilisateur (15) à partir de la combinaison de l'entrée tactile de l'utilisateur (5a) par l'écran tactile (7) et de l'interaction de l'utilisateur (5b) relativement à la plaque frontale (9), l'entrée combinée de l'utilisateur (15) étant déterminée en se basant à la fois sur l'entrée tactile de l'utilisateur (5a) capturée par l'écran bidimensionnel (7) et sur l'interaction de l'utilisateur (5b) relativement à la plaque frontale (9) .

2. Interface utilisateur selon la revendication 1,
- cette interface utilisateur (1) étant adaptée de façon à déduire l'entrée combinée de l'utilisateur (15) à partir de l'entrée tactile de l'utilisateur (5a) par l'écran tactile (7) et à partir de l'interaction de l'utilisateur (5b) relativement à la plaque frontale (9) étant capturées simultanément et/ou consécutivement.

3. Interface utilisateur selon l'une quelconque des revendications précédentes,
- cette interface utilisateur (1) étant adaptée de façon à déduire l'entrée combinée de l'utilisateur (15) à partir de l'entrée tactile de l'utilisateur (5a) et à partir de l'interaction de l'utilisateur (5b) qui forment un pont entre la plaque frontale (9) et l'écran (7) .

4. Interface utilisateur selon l'une quelconque des revendications précédentes,
- cette interface utilisateur (1) étant adaptée de façon à déduire une transition de l'entrée tactile de l'utilisateur (5a) à l'entrée de l'utilisateur (5b) relativement à la plaque frontale (9) et/ou de l'interaction de l'utilisateur (5b) relativement à la plaque frontale (9) à l'entrée tactile de l'utilisateur (5a) ;
- cette interface utilisateur (1) étant adaptée de façon à décuire l'entrée combinée de l'utilisateur (15) en dépendance de cette transition.

5. Interface utilisateur selon l'une quelconque des revendications précédentes, dans laquelle
- la surface d'affichage tridimensionnelle (11) est tactile pour capturer l'interaction de l'utilisateur (5b) .

6. Interface utilisateur selon l'une quelconque des revendications précédentes,
- cette interface utilisateur (1) comportant un dispositif d'imagerie (13) pour capturer l'interaction de l'utilisateur (5b).

7. Interface utilisateur selon la revendication 6, dans laquelle
- le dispositif d'imagerie (13) est adapté de façon à capturer des gestes en l'air comme une interaction d'utilisateur (5b) et de façon à exécuter la détection de proximité pour capturer l'interaction de l'utilisateur (5b).

8. Interface utilisateur selon la revendication 6 ou 7, dans laquelle
- le dispositif d'imagerie (13) est basé sur une imagerie RVB, une imagerie IR, une imagerie TOF et/ou comporte un dispositif LI DAR.

9. Interface utilisateur selon l'une quelconque des revendications précédentes,
- cette interface utilisateur (1) étant adaptée de façon à distinguer localement et/ou temporellement une pluralité d'entrées tactiles d'utilisateur (5a) et/ou d'interactions d'utilisateur (5b) relativement à la plaque frontale (9).

10. Interface utilisateur selon la revendication 9,
- cette interface utilisateur (1) étant adaptée de façon à capturer une entrée d'utilisateur (5) par des utilisateurs multiples.

11. Interface utilisateur selon l'une quelconque des revendications précédentes,
- cette interface utilisateur (1) comportant un capteur d'emplacement d'utilisateur et/ou de siège d'utilisateur.

12. Interface utilisateur selon l'une quelconque des revendications précédentes,
- cette interface utilisateur (1) étant adaptée de façon à afficher des informations (3a, 3b, 3b', 3b") en dépendance de l'entrée combinée de l'utilisateur (15) .

13. Interface utilisateur selon l'une quelconque des revendications précédentes,
- cette interface utilisateur (1) étant adaptée de façon à déduire l'entrée combinée de l'utilisateur (15) en dépendance de la position de l'entrée tactile de l'utilisateur (5a) relativement à la plaque frontale (9) .

14. Véhicule (2) comportant l'interface utilisateur (1) selon l'une quelconque des revendications précédentes.

15. Procédé d'utilisation d'une interface utilisateur (1) pour un véhicule (2) adaptée de façon à présenter des informations visibles (3a, 3b, 3b', 3b") et à capturer une entrée d'utilisateur (5), ce procédé comprenant :
- l'affichage d'informations (3a) sur une partie d'affichage (8) d'un écran tactile bidimensionnel (7) et la capture d'une entrée tactile d'utilisateur (5a) avec cet écran bidimensionnel (7) ;
- la transmission d'informations (3b ,3b', 3b") devant être affichées depuis l'écran (7) à un affichage de surface tridimensionnel (11) d'une plaque frontale optique (9) via une surface de contact (10) contactant l'écran (7) et un matériau guide de lumière optique (12) prévu entre la surface de contact (10) et la surface d'affichage tridimensionnelle (11) ; la plaque frontale (9) étant intégrée dans l'écran (7) de manière à ce qu'une extension aérienne de la surface d'affichage tridimensionnelle (11) et/ou une extension aérienne de la surface de contact (10) soit plus petite qu'une extension aérienne de l'écran (7), et de manière à ce que la surface de contact (10) soit disposée de façon à recevoir la lumière émise depuis l'écran (7) ;
- la capture d'une interaction d'utilisateur (5b) relativement à la plaque frontale (9) ; et
- la déduction d'une entrée combinée d'utilisateur (15) à partir de la combinaison de l'entrée tactile de l'utilisateur (5a) par l'écran tactile (7) et de l'interaction de l'utilisateur (5b) relativement à la plaque frontale (9), cette entrée combinée de l'utilisateur (15) étant déterminée en se basant à la fois sur l'entrée tactile de l'utilisateur (5a) capturée par l'écran bidimensionnel (7) et sur l'interaction de l'utilisateur (5b) relativement à la plaque frontale (9).
